(19) Europäisches Patentamt
European Patent Office
Office européen des brevets

(11) **EP 1 520 162 B1**

(12) **EUROPEAN PATENT SPECIFICATION**

(45) Date of publication and mention of the grant of the patent:
**22.04.2009 Bulletin 2009/17**

(51) Int Cl.:
***G01M 11/00*** *(2006.01)*

(21) Application number: **02758284.0**

(22) Date of filing: **29.06.2002**

(86) International application number:
**PCT/EP2002/007198**

(87) International publication number:
**WO 2004/003502 (08.01.2004 Gazette 2004/02)**

(54) **POLARIZATION DIVERSITY DETECTION USING A POLARIZATION MULTIPLEXED LOCAL OSCILLATOR**

POLARISATIONSDIVERSITÄTSERFASSUNG UNTER VERWENDUNG EINES POLARISATIONSMULTIPLEXIERTEN ÜBERLAGERUNGSOSZILLATORS

DETECTION DE DIVERSITE DE POLARISATION AU MOYEN D'UN OSCILLATEUR LOCAL MULTIPLEXE EN POLARISATION

(84) Designated Contracting States:
**DE FR GB**

(43) Date of publication of application:
**06.04.2005 Bulletin 2005/14**

(73) Proprietor: **Agilent Technologies, Inc.**
**Santa Clara, CA 95051 (US)**

(72) Inventor: **ROSENFELDT, Harald**
**20251 Hamburg (DE)**

(74) Representative: **Barth, Daniel Mathias et al**
**Agilent Technologies Deutschland GmbH**
**Patentabteilung**
**Herrenberger Strasse 130**
**71034 Böblingen (DE)**

(56) References cited:
**EP-A- 1 014 033**        **EP-A- 1 113 250**
**EP-A- 1 202 038**

- **PATENT ABSTRACTS OF JAPAN vol. 2000, no. 07, 29 September 2000 (2000-09-29) & JP 2000 097856 A (NIPPON TELEGR &TELEPH CORP <NTT>; ANDO ELECTRIC CO LTD; NTT), 7 April 2000 (2000-04-07)**
- **TAKADA K ET AL: "FREQUENCY-DOMAIN MEASUREMENT OF PHASE ERROR DISTRIBUTION IN NARROW-CHANNEL ARRAYED-WAVEGUIDE GRATING" ELECTRONICS LETTERS, IEE STEVENAGE, GB, vol. 36, no. 2, 20 January 2000 (2000-01-20), pages 160-161, XP000966144 ISSN: 0013-5194**

**Description**

BACKGROUND OF THE INVENTION

The present invention relates to determination of an optical property of an optical device under test, in particular to optical polarization diversity detection.

SUMMARY OF THE INVENTION

It is an object of the invention to provide improved optical polarization diversity detection.

The object is solved by the independent claims.

The prior art measuring concept according to EP 1113250 A1 acquired the Jones matrix elements of a DUT by using a laser signal which was swept in wavelength as stimulus. The output signal was analyzed by a coherent superposition with a LO signal. To provide polarization resolved measurement the output signal was split into two orthogonal components each of which were superimposed with the LO signal. To unambiguously acquire all 4 elements of the Jones matrix it was necessary to perform this measurement with two input polarization states. Therefore it was either necessary to perform an extra wavelength sweep or to insert a PDU into the DUT path allowing to stimulate the DUT with two polarization states 'simultaneously' according to US 09/941133 (US 2003/043467 A1).

In an embodiment of the present invention it is proposed to insert a PDU according to US 09/941133, the disclosure of which is incorporated herein by reference, into the LO path ($PDU_{LO}$) so that two orthogonal polarization states, a first state of polarization ($SOP_H$) and a second state of polarization ($SOP_V$), occur at the output of the $PDU_{LO}$. The two orthogonal components have traveled different optical paths inside the PDU and thus produce interference signatures at different electrical frequencies ($f_H$ and $f_V$) when combined with the DUT signal at the detector.

Therefore, in an embodiment of the present invention it is disclosed an enhancement of the interferometric measurement method of EP 1113250, the disclosure of which is incorporated herein by reference, which is able to measure the chromatic dispersion (CD) and polarization mode dispersion (PMD) of a device under test (DUT) with high accuracy. According to an embodiment of the present invention the use of a polarization delay unit (PDU) according to US 09/941133 in the local-oscillator (LO) path of the DUT interferometer allows to replace the polarization diversity detector (PDR) by a single detector to reduce complexity of the detection scheme. In this way, problems associated with detector symmetry and extinction ratio of the polarization beam splitter (PBS) can be solved since there is only one detector left so that the PBS can be omitted.

The interference signatures created by the interference of the DUT signal with $SOP_H$ and $SOP_V$ respectively can be distinguished preferably by applying band pass filters of appropriate center frequency and bandwidth.

Furthermore, amplitude and phase of the two spectral components only depend on the fraction of the DUT signal having the same polarization as the interfering LO signal. That is, the DUT signal is inherently decomposed into two polarizations $SOP_H$ and $SOP_V$ interfering with the corresponding two LO signals and producing signatures at $f_H$ and $f_V$ respectively. In an embodiment of the present invention the AC part of the detector signal can be written as follows:

$$P_{AC}(\omega) = E_{LO}E_{DUT}\left(\overrightarrow{sop}_{DUT} \cdot \overrightarrow{sop}_H\right)\cos\left(\varphi_H + \underbrace{\left(\tau_{DUT} - \tau_{LO,H}\right)}_{f_H}\omega\right) +$$

$$E_{LO}E_{DUT}\left(\overrightarrow{sop}_{DUT} \cdot \overrightarrow{sop}_V\right)\cos\left(\varphi_V + \underbrace{\left(\tau_{DUT} - \tau_{LO,V}\right)}_{f_V}\omega\right)$$

Hence, the polarization dependence of the interference effect can be used to realize polarization diversity detection and the information contained in the two signatures is equivalent to a prior art PDR output according to EP 1113250.

To produce a signal which can be processed in the established way by the Jones matrix eigenanalysis, the two spectral components can be separated using two bandpass filters (possibly FIR filters). Then the faster oscillating signal can be shifted in frequency so that it is aligned to the slower oscillating signal. This can easily be achieved if the differential group delay (DGD) of the PDU ($DGD_{PDU} = \tau_{LO,H}-\tau_{LO,V}$) is known. Then a linear phase term can be subtracted from the analytical signal by multiplying with $\exp(-(\tau_{LO,H}-\tau_{LO,V})\omega)$. Now the two generated signals are identical to those which would have been generated by a coherent prior art PDR detector.

Furthermore, the prior art concepts incorporating PDRs as detectors suffered from the fact that it is very difficult to choose an optimum LO polarization at more than two PDRs simultaneously. This problem can be solved by an embodiment of the present invention since the polarization of the LO signal does not enter the evaluation anymore. This property makes this embodiment particularly well suited for multiport device characterization where the LO is distributed among several detectors.

Using the prior art concept according to EP 1113250 for multiport device characterization requires distributing the LO signal among several PDR detectors. Unfortunately it is very difficult to provide an optimum input polarization of the LO signal at every PDR simultaneously simply by adjusting the input polarization of the whole setup. Therefore, with the cited prior art multiport devices can only be measured by performing several sweeps and adjusting the optimum input polarization for each sweep. Another solution would be to insert a one dimensional polarization controller (i.e. a wave plate of tunable retardation) in front of each PDR. This gives the opportunity to acquire all data in a single or at least in two scans.

According to an embodiment of the present invention a replacement of a PDR by a polarization multiplexed LO signal solves this problem since no special absolute orientation of the polarization states $SOP_H$ and $SOP_V$ are required.

Other preferred embodiments are shown by the dependent claims.

It is clear that the invention can be partly embodied or supported by one or more suitable software programs, which can be stored on or otherwise provided by any kind of data carrier, and which might be executed in or by any suitable data processing unit.

BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).

Fig. 1    is a schematic diagram displaying a way how to generate signals according to an embodiment of the present invention;

Fig. 2    is a graph showing two spectral components occurring in the electrical spectrum corresponding to two elements of the Jones matrix according to an embodiment of the present invention;

Fig. 3    shows a setup for multiport device characterization according to an embodiment of the present invention;

Fig. 4    shows a setup for single-scan multiport device characterization according to an embodiment of the present invention; and

Fig. 5    is a graph showing resulting spectral components when using the embodiment of Fig. 4.

DETAILED DESCRIPTION OF THE INVENTION

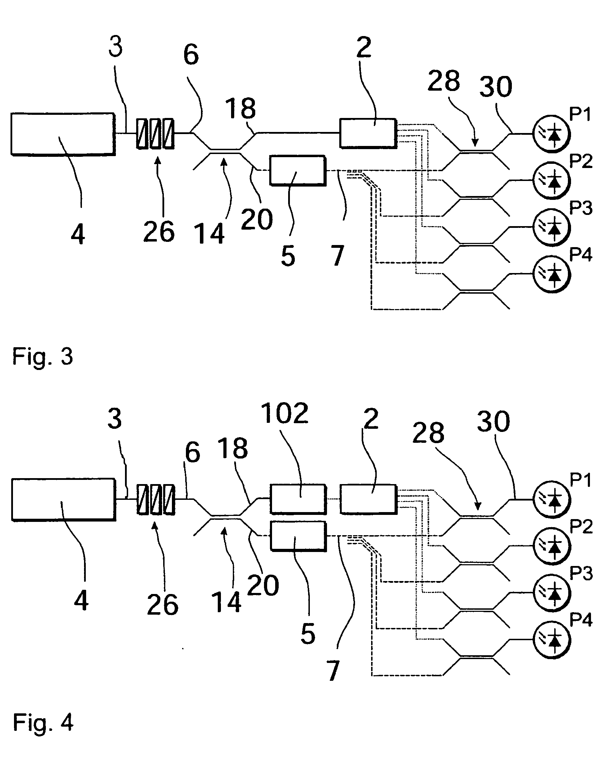

Embodiment of Fig. 3 shows a possible implementation of a measurement setup for multiport device characterization according to an embodiment of the present invention. A LO signal 3 coming from a tunable laser source (TLS) 4 is adjusted in its polarization to a defined polarization by a polarization setting tool 26 positioned in the path of the light beam 3 before a first beam splitter 14. The resulting incoming light beam 6 is split by the first beam splitter 14 into a first light beam 18 and a second light beam 20.

An optical device under test 2 is positioned in a first path of the first light beam 18 for coupling in the first light beam 18. A LO polarization delay unit 5 is positioned in a second path of the second light beam 20 for coupling in the second light beam 20 for splitting the second light beam 20 into a first part and a second part, delaying the second part of the second light beam 20 relative to the first part of the second light beam 20, and recombining the first and the second part of the second light beam 20 to a resulting recombined beam 7.

A second beam splitter 28 in said first and in said second path for superimposing the first light beam 18 and the recombined beam 7 with the recombined parts of the second light beam 20 to produce interferences between the first light beam 18 and the recombined parts of the second light beam 20 in at least one resulting superimposed light beam 30 traveling a resulting path.

A detector P1 in said resulting path is then detecting the power of the resulting superimposed light beam 30 traveling the resulting path as a function of frequency and polarization when tuning the frequency of the incoming light beam 6 over a given frequency range with the TLS 4. Then, a (not shown) evaluation unit derives optical properties of the optical device under test 2 from the frequency dependency of the detected powers.

Since the PDU 5 is a multiport device the resulting beam 7 coming from the PDU 5 is distributed to four identical beam splitters 28. Accordingly, beam 18 is distributed to the four beam splitters 28. Leaving beam splitters 28 are four superimposed beams 30 which are detected by four receivers P1, P2, P3, P4 in the above described manner.

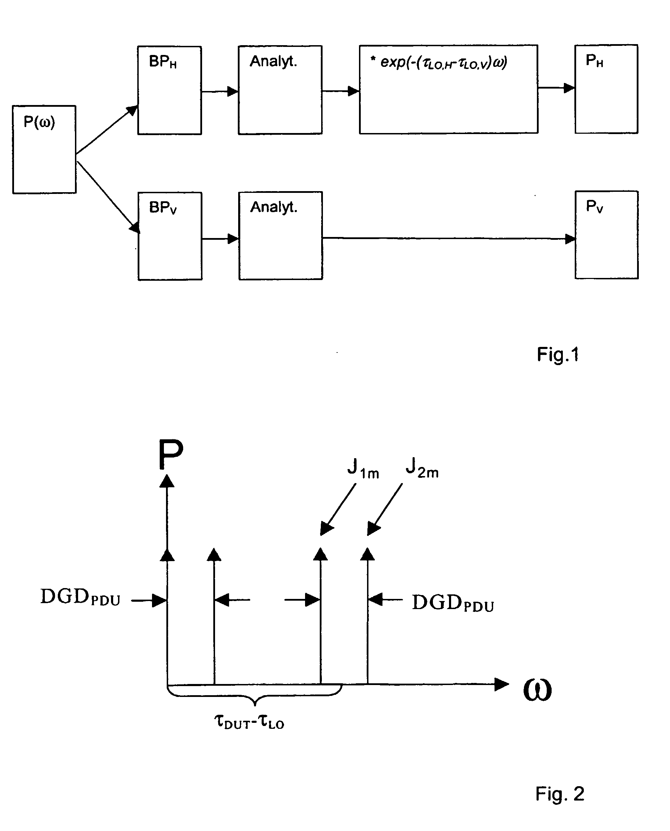

The received detector signal can be processed using the filtering setup of Fig. 1. Fig. 1 is a schematic diagram displaying a way how to generate signals according to an embodiment of the present invention. According to Fig. 3 the polarization controller 26 at the input of the system can adjust the input polarization of the PDU 5 appropriately so that the two propagation paths are excited with the same optical power. For the two-scan method according to EP 1113250, preferably two scans with orthogonal polarizations are performed. The equal power splitting inside the PDU 5 is maintained even if the input polarization is adjusted to the orthogonal state. The setup displayed in Fig. 3 has a significant reduced complexity and can be enhanced to more than four ports without any further considerations.

Because the PDU 5 is introduced into the LO path, two orthogonal polarization states, a first state of polarization $SOP_H$ and a second state of polarization $SOP_V$, occur at the output of the PDU 5. The two orthogonal components have traveled different optical paths inside the PDU 5 and thus produce interference signatures at different electrical frequencies $f_H$ and $f_V$ according to Fig. 2 when combined with the DUT signal 18 at the detectors P1-P4. Fig. 2 is a graph showing two spectral components occurring in the electrical spectrum corresponding to two elements of the Jones matrix

These spectral components or interference signatures created by the interference of the DUT signal 18 with signals $SOP_H$ and $SOP_V$ respectively can be distinguished preferably by applying band pass filters of appropriate center frequency and bandwidth.

Furthermore, amplitude and phase of the two spectral components only depend on the fraction of the DUT signal 18 having the same polarization as the interfering LO signal 7. That is, the DUT signal 18 is inherently decomposed into two polarizations $SOP_H$ and $SOP_V$ interfering with the corresponding two LO signals 7 and producing signatures at $f_H$ and $f_V$ respectively. The AC part of the detector signal can be written as follows:

$$P_{AC}(\omega) = E_{LO}E_{DUT}\left(\overrightarrow{sop}_{DUT} \cdot \overrightarrow{sop}_H\right)\cos\left(\varphi_H + \underbrace{(\tau_{DUT} - \tau_{LO,H})}_{f_H}\omega\right) +$$

$$E_{LO}E_{DUT}\left(\overrightarrow{sop}_{DUT} \cdot \overrightarrow{sop}_V\right)\cos\left(\varphi_V + \underbrace{(\tau_{DUT} - \tau_{LO,V})}_{f_V}\omega\right)$$

To produce a signal which can be processed in the established way by the Jones matrix eigenanalysis, the two spectral components can be separated using two FIR filters according to the scheme displayed in Fig. 1. The faster oscillating signal can be shifted in frequency so that it is aligned to the slower oscillating signal. This can easily be achieved if the DGD of the PDU is known, with $DGD_{PDU} = \tau_{LO,H} - \tau_{LO,V}$. Then a linear phase term can be subtracted from the analytical signal by multiplying with $\exp(-(\tau_{LO,H} - \tau_{LO,V})\omega)$. According to Fig. 1 the two generated signals are identical to those which would have been generated by a coherent prior art PDR detector.

The method according to this embodiment is compatible to the single-scan measurement concept described in US 09/940741, the priority of which is claimed by the present application and the disclosure of which is incorporated herein by reference.

If an additional but identical PDU 102 is inserted into the DUT path according to an embodiment of Fig. 4 showing a setup for characterizing a DUT 2 with four output ports P1-P4 using the single-scan approach, four interference signatures are generated at the receivers P1-P4. However, the DGD values of the two PDUs 5 and 102 have to be chosen appropriately to ensure that the four spectral components do not intersect. Equidistant frequency components can be generated if the two DGD values, hereafter referred to as $DGD_{PDULO}$ and $DGD_{PDUDUT}$, differ by a factor of two. Furthermore, frequency components can be generated in the low-frequency range which can easily be removed by a high-pass filter.

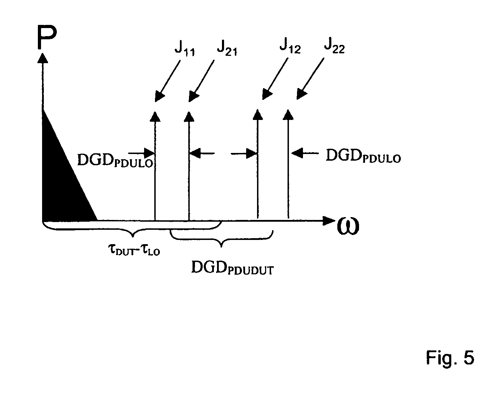

Fig. 5. shows the resulting spectral components of the electrical spectrum. The four components $J_{11}$, $J_{21}$, $J_{12}$, $J_{22}$ correspond to the four elements of the Jones matrix. They can be separated in the same way as it is done according to Fig. 1., and three of the four components $J_{11}$, $J_{21}$, $J_{12}$, $J_{22}$ can be shifted in frequency to be realigned with the first component $J_{11}$. At this point the established Jones matrix eigenanalysis can be applied to the four signals to derive information on PMD of DUT 2.

**Claims**

1. A method of determination of a property of an optical device under test (2), comprising the steps of:

   - splitting an incoming light beam (6) into a first light beam (18) and a second light beam (20),
   - coupling the first light beam (18) into the optical device under test (2),
   - letting the second light beam (20) travel a different path as the first light beam (18),
   - splitting the second light beam (20) into a first part and a second part,
   - delaying the second part of the second light beam (20) relative to the first part of the second light beam (20),
   - recombining the first and the second part of the second light beam (20), and **characterised by** the additional steps of:

      - superimposing the first light beam (18) and the recombined parts of the second light beam (20) to produce interferences between the first light beam (18) and the recombined parts of the second light beam (20) in at least one resulting superimposed light beam (30),
      - detecting the power of the at least one superimposed light beam (30) as a function of frequency and polarization when tuning the frequency of the incoming light beam (6) over a given frequency range,
      - deriving the optical property of the optical device under test (2) from the frequency dependence of the detected powers.

2. The method of claim 1, further comprising the step of:

   - deriving elements of the Jones matrix for the optical device under test (2) from the frequency dependence of the detected powers.

3. The method of claims 1 or 2, further comprising the steps of:

   - changing the polarization of the first light beam (18) with respect to a original polarization of the first light beam (18) into a changed polarization, preferably said changed polarization being orthogonal to said original polarization,
   - performing the steps of claim 1 a second time with said changed polarization.

4. The method of claim 1 or any one of the above claims, further comprising the steps of:

   - splitting the first light beam (18) into a first part and a second part,
   - delaying the second part of the first light beam (18) relative to the first part of the first light beam (18),
   - recombining the first and the second part of the first light beam (18),
   - coupling the recombined parts of the first light beam (18) with different polarizations into the optical device under test (2).

5. The method of claim 1 or any one of the above claims, further comprising the steps of:

   - whereby the polarizations of at least one of the following being at least approximately orthogonal to each other: the first and second parts of the first light beam (18), the first and second parts of the second light beam (20).

6. The method of claim 1 or any one of the above claims, further comprising the step of:

   - whereby each recombined part of at least one of the following has at least approximately 50% of the power of the incoming light beam (6): each recombined part of the first light beam (18), each recombined part of the second light beam (20).

7. The method of claim 1 or any one of the above claims, further comprising the steps of:

   - filtering a peak in the spectrum of detected powers, preferably by a band pass filter,
   - allocating the peak in the spectrum to the respective part,
   - deriving optical properties of the optical device under test (2) from the frequency and polarization dependence of the detected powers.

8. The method of claim 1 or any one of the above claims, further comprising the steps of:

- producing interference between the recombined parts of at least one of the following in a resulting superimposed light beam (138): the first and second parts of the first light beam (18), the first and second parts of the second light beam (20),
- continuously detecting the power of the resulting superimposed light beam as a function of frequency when tuning the frequency of the incoming light beam (6) over a given frequency range,
- detecting a nonlinearity in a tuning gradient frequency when tuning the frequency of the incoming light beam (6) over the given frequency range,
- when detecting a nonlinearity, using said detected nonlinearity information to compensate effects on the detected powers.

9. The method of claim 8, further comprising the step of:

- producing interference by polarizing the recombined parts.

10. The method of claim 1 or any one of the above claims, further comprising at least one of the following steps:

- deriving the polarization mode dispersion of the device under test (2) from the information obtained through the measurement, preferably represented as Jones matrix elements of the device under test (2),
- deriving the chromatic dispersion of the device under test (2) from the Jones matrix elements of the device under test (2),
- deriving the principal states of polarization of the device under test (2) from the Jones matrix elements of the device under test (2),
- deriving the polarization dependent loss of the device under test (2) from the Jones matrix elements of the device under test (2).
- deriving the fast and slow group delays, associated with the fast and slow principal states of polarization of the device under test (2) from the Jones matrix elements of the device under test (2).
- deriving the insertion loss of the device under test (2) from the Jones matrix elements of the device under test (2).
- deriving the transmissivity of reflectivity of the device under test (2) from the Jones matrix elements of the device under test (2).
- deriving higher-order polarization mode dispersion parameters, such as the rate of change of the differential group delay with frequency, from the Jones matrix elements of the device under test (2).

11. The method of claim 1 or any one of above claims, further comprising the step of:

- splitting at least one of the following into a first and a second part in a polarization dependent manner: the first light beam (18), the second light beam (20).

12. The method of claim 1 or any one of above claims, further comprising the step of:

- separating the spectral components of each of the recombined parts by using two band pass filters, preferably FIR (finite impulse response) filters, to produce a signal to be processed by a Jones matrix eigenanalysis,
- shifting either the faster or the slower oscillating signal of the spectral components in frequency so that it is aligned to the other oscillating signal, preferably by using the differential group delay $DGD_{PDU} = \tau_{LO,H} - \tau_{LO,V}$ of the PDU (polarization delay unit), $\tau_{LO,H}$ being the DGD of one spectral component, $\tau_{LO,V}$ being the DGD of the other spectral component, preferably performing the shift in frequency by subtracting a linear phase term from the analytical signal by multiplying with $\exp(\pm(\tau_{LO,H} - \tau_{LO,V})\omega)$, $\omega$ being the frequency of the incoming light beam (6).

13. The method of claim 1 or any one of above claims, further comprising the step of:

- choosing a DGD value when delaying the second part of the second light beam (20) relative to the first part of the second light beam (20) relative to a DGD value or vice versa when delaying the second part of the first light beam (18) relative to the first part of the first light beam (18) in a way ensuring that respective spectral components of each part do not intersect.

14. An apparatus for determination of optical properties of an optical device under test (2), comprising:

a first beam splitter (14) in a path of an incoming light beam (6) for splitting the incoming light beam (6) into a first light beam (18) traveling a first path and a second light beam (20) traveling a second path, wherein the optical device under test (2) can be coupled in said first path for coupling in the first light beam (18), **characterised by**

a LO (local oscillator) polarization delay unit (5) for:

- splitting the second light beam (20) into a first part and a second part,
- delaying the second part of the second light beam (20) relative to the first part of the second light beam (20),

recombining the first and the second part of the second light beam (20),

a second beam splitter (28) in said first and in said second path for superimposing the first light beam (18) and the recombined parts of the second light beam (20) to produce interferences between the first light beam (18) and the recombined parts of the second light beam (20) in at least one resulting superimposed light beam (30) traveling a resulting path,

a detector unit (P1, P2, P3, P4) in said resulting path for detecting the power of the resulting superimposed light beam (30) traveling the resulting path as a function of frequency and polarization when tuning the frequency of the incoming light beam (6) over a given frequency range,

an evaluation unit for deriving optical properties of the optical device under test (2) from the frequency dependency of the detected powers.

15. The apparatus of claim 14,
comprising an evaluation unit for deriving elements of the Jones matrix of the optical device under test (2) from the frequency dependence of the detected powers.

16. The apparatus of claims 14 or 15,
further comprising a polarization setting tool (26) positioned in said first path for adjusting the polarization of the first light beam (18) to a defined polarization,
wherein the polarization setting tool (26) is positioned in the path of the incoming light beam (6) before or after the first beam splitter (14).

17. The apparatus of claims 15 or 16,
wherein the polarization setting tool (26) is adjusting the polarization of the respective beam (6; 18) in a linear manner.

18. The apparatus of claim 14 or any one of claims 15 - 17,
further comprising: a DUT (device under test) polarization delay unit (102) for:

- splitting the first light beam (18) into a first part and a second part,
- delaying the second part relative to the first part,
- recombining the first and the second part,
- providing the recombined parts with different polarizations for coupling into the optical device under test (2).

19. The apparatus of claim 14 or any one of claims 15 - 18,
at least one of the following comprises a first polarization beam splitter for splitting the first light beam (18) into a first part and a second part: the LO polarization delay unit, the DUT polarization delay unit (102).

20. The apparatus of claim 14 or any one of claims 15 - 19,
at least one of the following comprises a second polarization beam splitter for recombining the first part and the second part: the LO polarization delay unit, the DUT polarization delay unit (102).

21. The apparatus of claim 14 or any one of claims 15 - 20,
at least one of the following comprises a first optical path for the first part and a second optical path for the second part, the second path having a longer optical length than the first path, for delaying the second part relative to the first part: the LO polarization delay unit, the DUT polarization delay unit (102).

22. The apparatus of claim 14 or any one of claims 15 - 21,
at least one of the following comprises a polarizing device for providing each of the recombined parts with different polarizations: the LO polarization delay unit, the DUT polarization delay unit (102).

**23.** The apparatus of claim 14 or any one of claims 15 - 22,

at least one of the following comprises a device for providing the recombined parts with different polarizations to a polarizer to produce interference between the parts in a resulting superimposed light beam traveling a resulting path: the LO polarization delay unit, the DUT polarization delay unit (102),

the apparatus further comprising a power detector in said resulting path for detecting the power of the resulting superimposed light beam as a function of frequency when tuning the frequency of the incoming light beam (6) over a given frequency range,

whereby an output of the power detector is connected with the evaluation unit for detecting any nonlinearity in a tuning gradient frequency when tuning the frequency of the incoming light beam (6) over the given frequency range, and in case evaluation unit is detecting any nonlinearity, the evaluation unit is using said detected nonlinearity information to compensate effects on the detected powers caused by said nonlinearity.

**24.** The apparatus of claim 23,

the device being at least one of the following:

an output port of the second polarization beam splitter not to be connected with the optical device under test (2),

a polarization maintaining coupler to be connected with the output port of the second polarization beam splitter to be connected with the optical device under test (2),

at least one beam splitter to be connected with the output port of the second polarization beam splitter to be connected with the optical device under test (2).

## Patentansprüche

**1.** Verfahren zum Ermitteln einer Eigenschaft einer zu testenden optischen Einheit (2), wobei das Verfahren die folgenden Schritte aufweist:

- Teilen eines eintretenden Lichtstrahls (6) in einen ersten Lichtstrahl (18) und einen zweiten Lichtstrahl (20),
- Einkoppeln des ersten Lichtstrahls (18) in die zu testende optische Einheit (2),
- Führen des zweiten Lichtstrahls (20) über einen anderen Strahlengang als den des ersten Lichtstrahls (18),
- Teilen des zweiten Lichtstrahls (20) in einen ersten Teil und einen zweiten Teil,
- Verzögern des zweiten Teils des zweiten Lichtstrahls (20) in Bezug auf den ersten Teil des zweiten Lichtstrahls (20),
- Rekombinieren des ersten und des zweiten Teils des zweiten Lichtstrahls (20),

und wobei das Verfahren durch die folgenden zusätzlichen Schritte **gekennzeichnet** ist:

- Überlagern des ersten Lichtstrahls (18) und der rekombinierten Teile des zweiten Lichtstrahls (20), um in mindestens einem entstehenden überlagerten Lichtstrahl (30) Interferenzen zwischen dem ersten Lichtstrahl (18) und den rekombinierten Teilen des zweiten Lichtstrahls (20) zu erzeugen,
- Detektieren der Leistung des mindestens einen überlagerten Lichtstrahls (30) als Funktion der Frequenz und der Polarisation, wenn die Frequenz des eintreffenden Lichtstrahls (6) über einen vorgegebenen Frequenzbereich hinweg durchgestimmt wird,
- Ableiten der optischen Eigenschaft der zu testenden optischen Einheit (2) aus der Frequenzabhängigkeit der detektierten Leistungswerte.

**2.** Verfahren nach Anspruch 1, das ferner den Schritt aufweist:

- Ableiten von Elementen der Jones-Matrix für die zu testende optische Einheit (2) aus der Frequenzabhängigkeit der detektierten Leistungswerte.

**3.** Verfahren nach den Ansprüchen 1 oder 2, das ferner die folgenden Schritte aufweist:

- Ändern der Polarisation des ersten Lichtstrahls (18) in Bezug auf eine ursprüngliche Polarisation des ersten Lichtstrahls (18) zu einer geänderten Polarisation, wobei die geänderte Polarisation vorzugsweise senkrecht zur ursprünglichen Polarisation steht,
- Ausführen der Schritte nach Anspruch 1 ein zweites Mal mit der geänderten Polarisation.

**4.** Verfahren nach Anspruch 1 oder einem beliebigen der vorhergehenden Ansprüche, das ferner die folgenden Schritte aufweist:

- Teilen des ersten Lichtstrahls (18) in einen ersten Teil und einen zweiten Teil,
- Verzögern des zweiten Teils des ersten Lichtstrahls (18) in Bezug auf den ersten Teil des ersten Lichtstrahls (18),
- Rekombinieren des ersten und des zweiten Teils des ersten Lichtstrahl (18),
- Einkoppeln der rekombinierten Teile des ersten Lichtstrahls (18) mit verschiedenen Polarisationen in die zu testende optische Einheit (2).

5. Verfahren nach Anspruch 1 oder einem beliebigen der vorhergehenden Ansprüche, das ferner die folgenden Schritte aufweist:

- die Polarisationen mindestens eines der folgenden Lichtstrahlen stehen zumindest annähernd senkrecht aufeinander: die Polarisationen des ersten und des zweiten Teils des ersten Lichtstrahls (18), des ersten und des zweiten Teils des zweiten Lichtstrahls (20).

6. Verfahren nach Anspruch 1 oder einem beliebigen der vorhergehenden Ansprüche, das ferner den Schritt aufweist:

- jeder rekombinierte Teil mindestens eines der folgenden Lichtstrahlen weist mindestens annähernd 50 % der Leistung des eintretenden Lichtstrahls (6) auf: jeder rekombinierte Teil des ersten Lichtstrahls (18), jeder rekombinierte Teil des zweiten Lichtstrahls (20).

7. Verfahren nach Anspruch 1 oder einem beliebigen der vorhergehenden Ansprüche, das ferner die folgenden Schritte aufweist:

- Filtern eines Peak im Spektrum der detektierten Leistungswerte, vorzugsweise mittels eines Bandpassfilters,
- Zuordnen des Peak im Spektrum zum jeweiligen Teil,
- Ableiten optischer Eigenschaften der zu testenden optischen Einheit (2) aus der Frequenz- und Polarisationsabhängigkeit der detektierten Leistungswerte.

8. Verfahren nach Anspruch 1 oder einem beliebigen der vorhergehenden Ansprüche, das ferner die folgenden Schritte aufweist:

- Erzeugen einer Interferenz zwischen den rekombinierten Teilen mindestens eines der folgenden Lichtstrahlen in einem resultierenden überlagerten Lichtstrahl (138): zwischen dem ersten und dem zweiten Teil des ersten Lichtstrahls (18), zwischen dem ersten und dem zweiten Teil des zweiten Lichtstrahls (20),
- Kontinuierliches Detektieren der Leistung des resultierenden überlagerten Lichtstrahls als Funktion der Frequenz, während die Frequenz des eintreffenden Lichtstrahls (6) über einen vorgegebenen Frequenzbereich durchgestimmt wird,
- Detektieren einer Nichtlinearität bei einer Durchstimmgradientenfrequenz, während das Durchstimmen der Frequenz des eintreffenden Lichtstrahls (6) über den vorgegebenen Frequenzbereich hinweg erfolgt,
- Verwenden der detektierten Nichtlinearitätsinformation zum Kompensieren von Effekten auf die detektierten Leistungswerte, wenn eine Nichtlinearität detektiert wird.

9. Verfahren nach Anspruch 8, das ferner den Schritt aufweist:

- Erzeugen einer Interferenz durch Polarisieren der rekombinierten Teile.

10. Verfahren nach Anspruch 1 oder einem der vorhergehenden Ansprüche, das ferner mindestens einen der folgenden Schritte aufweist:

- Ableiten der Dispersion des Polarisationsmodus der zu testenden Einheit (2) aus der durch die Messung gewonnenen Information, vorzugsweise in Form von Elementen der Jones-Matrix der zu testenden Einheit (2),
- Ableiten der chromatischen Dispersion der zu testenden Einheit (2) aus den Elementen der Jones-Matrix der zu testenden Einheit (2),
- Ableiten der Polarisationsgrundzustände der zu testenden Einheit (2) aus den Elementen der Jones-Matrix der zu testenden Einheit (2),
- Ableiten der polarisationsabhängigen Dämpfung der zu testenden Einheit (2) aus den Elementen der Jones-Matrix der zu testenden Einheit (2),
- Ableiten der schnellen und langsamen Gruppenverzögerungen, die auf die schnellen und langsamen Polarisationsgrundzustände der zu testenden Einheit (2) zurückzuführen sind, aus den Elementen der Jones-Matrix der zu testenden Einheit (2),
- Ableiten der Einfügungsdämpfung der zu testenden Einheit (2) aus den Elementen der Jones-Matrix der zu testenden Einheit (2),
- Ableiten des Transmissionsgrades oder des Reflexionsgrades der zu testenden Einheit (2) aus den Elementen der Jones-Matrix der zu testenden Einheit (2),
- Ableiten von Parametern höherer Ordnung der Polarisationsmodusdispersion, zum Beispiel der Änderungsgeschwindigkeit der differenziellen Gruppenverzögerung mit der Frequenz, von den Elementen der Jones-Matrix der zu testenden Einheit (2).

**11.** Verfahren nach Anspruch 1 oder einem beliebigen der vorhergehenden Ansprüche, das ferner den Schritt aufweist:

- Polarisationsabhängiges Teilen mindestens eines der folgenden Lichtstrahlen in einen ersten und einen zweiten Teil: des ersten Lichtstrahls (18), des zweiten Lichtstrahls (20).

**12.** Verfahren nach Anspruch 1 oder einem beliebigen der vorhergehenden Ansprüche, das ferner die folgenden Ansprüche aufweist:

- Trennen der Spektralkomponenten jedes der rekombinierten Teile unter Verwendung von zwei Bandpassfiltern, vorzugsweise von FIR-Filtern (finite impulse response - endliche Impulsantwort), um ein von einer Jones-Matrix-Eigenanalyse zu verarbeitendes Signal zu erzeugen,
- Verschieben der Frequenz entweder des schneller oder des langsamer schwingenden Signals der Spektralkomponenten, damit dieses an das andere schwingende Signal angepasst wird, vorzugsweise unter Verwendung der differenziellen Gruppenverzögerung $DGP_{PDU} = \tau_{LO,H} - \tau_{LO,V}$ der PDU (polarization delay unit, Polarisationsverzögerungseinheit), wobei $\tau_{LO,H}$ gleich der DGD einer Spektralkomponente und $\tau_{LO,V}$ gleich der DGD der anderen Spektralkomponente ist, wobei die Frequenzverschiebung vorzugsweise durch Subtrahieren eines linearen Phasenterms des Analysesignals erfolgt, indem mit $\exp(\pm(\tau_{LO,H} - \tau_{LO,V})\omega)$ multipliziert wird, wobei $\omega$ gleich der Frequenz des eintretenden Lichtstrahls (6) ist.

**13.** Verfahren nach Anspruch 1 oder einem beliebigen der vorhergehenden Ansprüche, das ferner den Schritt aufweist:

- Wählen eines DGD-Wertes, wenn der zweite Teil des zweiten Lichtstrahls (20) in Bezug auf den ersten Teil des zweiten Lichtstrahls (20) verzögert wird, in Bezug auf einen DGD-Wert oder umgekehrt, wenn der zweite Teil des ersten Lichtstrahls (18) in Bezug auf den ersten Teil des ersten Lichtstrahls (18) verzögert wird, derart, dass sichergestellt wird, dass sich entsprechende Spektralkomponenten jedes Teils nicht überschneiden.

**14.** Vorrichtung zur Ermittlung optischer Eigenschaften einer zu testenden optischen Einheit (2), wobei die Vorrichtung Folgendes aufweist:

einen ersten Strahlteiler (14) in einem Strahlengang eines eintretenden Lichtstrahls (6) zum Teilen des eintretenden Lichtstrahls (6) in einen ersten Lichtstrahl (18), der einen ersten Strahlengang durchläuft, und in einen zweiten Lichtstrahl (20), der einen zweiten Strahlengang durchläuft, wobei die zu testende optische Einheit (2) in den ersten Strahlengang eingekoppelt werden kann, um den ersten Lichtstrahl (18) einzukoppeln, **gekennzeichnet durch** eine LO-Polarisationsverzögerungseinheit (local oscillator - lokaler Oszillator) (5) zum:

- Teilen des zweiten Lichtstrahls (20) in einen ersten Teil und einen zweiten Teil,
- Verzögern des zweiten Teils des zweiten Lichtstrahls (20) in Bezug auf den ersten Teil des zweiten Lichtstrahls (20),

das Rekombinieren des ersten und des zweiten Teils des zweiten Lichtstrahls (20), einen zweiten Strahlteiler (28) im ersten und im zweiten Strahlengang zum Überlagern des ersten Lichtstrahls (18) und der rekombinierten Teile des zweiten Lichtstrahls (20), um Interferenzen zwischen dem ersten Lichtstrahl (18) und den rekombinierten Teilen des zweiten Lichtstrahls (20) in mindestens einem resultierenden überlagerten Lichtstrahl (30) zu erzeugen, der einen resultierenden Strahlengang durchläuft, eine Detektoreinheit (P1, P2, P3, P4) im resultierenden Strahlengang zum Detektieren der Leistung des den resultierenden Strahlengang durchlaufenden überlagerten Lichtstrahls (30) als Funktion der Frequenz und der Polarisation, während die Frequenz des eintretenden Lichtstrahls (6) über einen vorgegebenen Frequenzbereich hinweg durchgestimmt wird,

eine Bewertungseinheit zum Ableiten optischer Eigenschaften der zu testenden optischen Einheit (2) von der Frequenzabhängigkeit der detektierten Leistungswerte.

15. Vorrichtung nach Anspruch 14,

die eine Bewertungseinheit zum Ableiten von Elementen der Jones-Matrix der zu testenden optischen Einheit (2) von der Frequenzabhängigkeit von den detektierten Leistungswerten aufweist.

16. Vorrichtung nach den Ansprüchen 14 oder 15,

die ferner ein im ersten Strahlengang angeordnetes Polarisationseinstellwerkzeug (26) zum Einstellen der Polarisation des ersten Lichtstrahls (18) auf einen definierten Polarisationswert aufweist,

wobei das Polarisationseinstellwerkzeug (26) vor oder nach dem ersten Strahlteiler (14) im Strahlengang des eintretenden Lichtstrahls (6) angeordnet wird.

17. Vorrichtung nach den Ansprüchen 15 oder 16,

wobei das Polarisationseinstellwerkzeug (26) die Polarisation des entsprechenden Strahls (6; 18) auf lineare Weise einstellt.

18. Vorrichtung nach Anspruch 14 oder einem beliebigen der Ansprüche 15 bis 17,

die ferner aufweist: eine DUT- Polarisationsverzögerungseinheit (device under test - zu testende Einheit) (102) zum:

- Teilen des ersten Lichtstrahls (18) in einen ersten Teil und einen zweiten Teil,
- Verzögern des zweiten Teil in Bezug auf den ersten Teil,
- Rekombinieren des ersten und des zweiten Teils,
- Bereitstellen der rekombinierten Teile mit unterschiedlichen Polarisationen zum Einkoppeln in die zu testende optische Einheit (2).

19. Vorrichtung nach Anspruch 14 oder einem beliebigen der Ansprüche 15 bis 18,

wobei mindestens eine der folgenden Einheiten einen Polarisationsstrahlteiler zum Teilen des ersten Lichtstrahls (18) in einen ersten Teil und einen zweiten Teil Folgendes aufweist: die LO-Polarisationsverzögerungseinheit, die DUT-Polarisationsverzögerungseinheit (102).

20. Vorrichtung nach Anspruch 14 oder einem beliebigen der Ansprüche 15 bis 19,

wobei mindestens eine der folgenden Einheiten einen zweiten Polarisationsstrahlteiler zum Rekombinieren des ersten und des zweiten Teils aufweist: die LO-Polarisationsverzögerungseinheit, die DUT-Polarisationsverzögerungseinheit (102).

21. Vorrichtung nach Anspruch 14 oder einem beliebigen der Ansprüche 15 bis 20,

wobei mindestens eine der folgenden Einheiten einen ersten Strahlengang für den ersten Teil und einen zweiten Strahlengang für den zweiten Teil aufweist,

wobei der zweite Strahlengang eine größere optische Weglänge aufweist als der erste Strahlengang, um den zweiten Teil in Bezug auf den ersten Teil zu verzögern: die LO-Polarisationsverzögerungseinheit, die DUT-Polarisationsverzögerungseinheit (102).

22. Vorrichtung nach Anspruch 14 oder einem beliebigen der Ansprüche 15 bis 21,

wobei mindestens eine der folgenden Einheiten eine Polarisationseinheit aufweist, um jeden der rekombinierten Teile mit verschiedenen Polarisationen zu versehen: die LO-Polarisationsverzögerungseinheit, die DUT-Polarisationsverzögerungseinheit (102).

23. Vorrichtung nach Anspruch 14 oder einem beliebigen der Ansprüche 15 bis 22,

wobei mindestens eine der folgenden Einheiten eine Einheit zum Bereitstellten der rekombinierten Teile mit verschiedenen Polarisationen aufweist, um eine Interferenz zwischen den Teilen in einem resultierenden überlagerten Lichtstrahl zu erzeugen, der einen resultierenden Strahlengang durchläuft: die LO-Polarisationsverzögerungseinheit, die DUT-Polarisationsverzögerungseinheit (102),

wobei die Vorrichtung ferner im resultierenden Strahlengang einen Leistungsdetektor aufweist, um die Leistung des resultierenden überlagerten Lichtstrahls als Funktion der Frequenz zu detektieren, während die Frequenz des eintretenden Lichtstrahls (6) über einen vorgegebenen Frequenzbereich hinweg durchgestimmt wird,
wobei ein Ausgang des Leistungsdetektors mit der Bewertungseinheit verbunden ist, um in einer Durchstimmgradientenfrequenz jede Nichtlinearität zu detektieren, während die Frequenz des eintretenden Lichtstrahls (6) über den vorgegebenen Frequenzbereich hinweg durchgestimmt wird, und wobei die Bewertungseinheit, wenn diese eine Nichtlinearität detektiert, unter Verwendung der detektierten Nichtlinearitätsinformation die von der Nichtlinearität verursachten Auswirkungen auf die detektierten Leistungswerte kompensiert.

24. Vorrichtung nach Anspruch 23,
wobei die Einheit aus mindestens einer der folgenden Komponenten besteht:

einem Ausgangsanschluss des zweiten Polarisationsstrahlteilers, der nicht mit der zu testenden optischen Einheit (2) verbunden werden soll,
einem polarisationserhaltenden Koppler, der mit dem Ausgangsanschluss des zweiten Polarisationsstrahlteilers verbunden werden soll, welcher mit der zu testenden optischen Einheit (2) verbunden werden soll,
mindestens einem Strahlteiler, der mit dem Ausgangsanschluss des zweiten Polarisationsstrahlteilers verbunden werden soll, welcher mit der zu testenden optischen Einheit (2) verbunden werden soll.

**Revendications**

1. Méthode de détermination d'une propriété d'un dispositif optique en essai (2), comprenant les étapes suivantes :

    - division d'un faisceau lumineux entrant (6) en un premier faisceau lumineux (18) et un second faisceau lumineux (20),
    - couplage du premier faisceau lumineux (18) dans le dispositif optique en essai (2),
    - soumission du second faisceau lumineux (20) à une trajectoire différente de celle du premier faisceau lumineux (18),
    - division du second faisceau lumineux (20) en une première partie et une seconde partie,
    - retardement de la seconde partie du second faisceau lumineux (20) par rapport à la première partie du second faisceau lumineux (20),
    - reformation de la première et de la seconde partie du second faisceau lumineux (20),
    et **caractérisée par** les étapes supplémentaires suivantes :

    - superposition du premier faisceau lumineux (18) et des parties reformées du second faisceau lumineux (20) afin de produire des interférences entre le premier faisceau lumineux (18) et les parties reformées du second faisceau lumineux (20) en au moins un faisceau lumineux superposé résultant (30),
    - détection de la puissance d'au moins un faisceau lumineux superposé (30) en tant que fonction de la fréquence et de la polarisation lors du réglage de la fréquence du faisceau lumineux entrant (6) sur un domaine de fréquences donné,
    - déduction de la propriété optique du dispositif optique en essai (2) à partir de l'étude des puissances détectées en fonction de la fréquence.

2. Méthode suivant la revendication 1, comprenant en outre l'étape suivante :

    - déduction des éléments de la matrice de Jones pour le dispositif optique en essai (2) à partir de l'étude des puissances détectées en fonction de la fréquence.

3. Méthode suivant la revendication 1 ou 2, comprenant en outre les étapes suivantes :

    - modification de la polarisation du premier faisceau lumineux (18) par rapport à une polarisation initiale du premier faisceau lumineux (18) en une polarisation modifiée, ladite polarisation modifiée étant, de préférence, orthogonale à ladite polarisation initiale,
    - exécution des étapes suivant la revendication 1 une seconde fois avec ladite polarisation modifiée.

4. Méthode suivant la revendication 1 ou l'une quelconque des revendications ci-dessus, comprenant en outre les étapes suivantes :

    - division du premier faisceau lumineux (18) en une première partie et une seconde partie,

- retardement de la seconde partie du premier faisceau lumineux (18) par rapport à la première partie du premier faisceau lumineux (18),
- reformation de la première et de la seconde partie du premier faisceau lumineux (18).
- couplage des parties reformées du premier faisceau lumineux (18) avec différentes polarisations dans le dispositif optique en essai (2).

5. Méthode suivant la revendication 1 ou l'une quelconque des revendications ci-dessus, comprenant en outre les étapes suivantes :

par lesquelles les polarisations d'au moins un des éléments suivants sont au moins plus ou moins orthogonales l'une par rapport à l'autre :

les première et seconde parties du premier faisceau lumineux (18), les première et seconde parties du second faisceau lumineux (20).

6. Méthode suivant la revendication 1 ou l'une quelconque des revendications ci-dessus, comprenant en outre l'étape suivante :

- par laquelle chaque partie reformée d'au moins un des éléments suivants présente au moins environ 50 % de la puissance du faisceau lumineux entrant (6) : chaque partie reformée du premier faisceau lumineux (18), chaque partie reformée du second faisceau lumineux (20).

7. Méthode suivant la revendication 1 ou l'une quelconque des revendications ci-dessus, comprenant en outre les étapes suivantes :

- filtrage d'un pic du spectre des puissances détectées, de préférence par un filtre passe-bande,
- attribution du pic du spectre à la partie concernée,
- déduction des propriétés optiques du dispositif optique en essai (2) à partir de l'étude des puissances détectées en fonction de la fréquence et de la polarisation.

8. Méthode suivant la revendication 1 ou l'une quelconque des revendications ci-dessus, comprenant en outre les étapes suivantes :

- production d'interférences entre les parties reformées d'au moins un des éléments suivants dans un faisceau lumineux superposé résultant (138) : les première et seconde parties du premier faisceau lumineux (18), les première et seconde parties du second faisceau lumineux (20),
- détection continue de la puissance du faisceau lumineux superposé résultant en tant que fonction de la fréquence lors du réglage de la fréquence du faisceau lumineux entrant (6) sur un domaine de fréquences donné,
- détection d'une non-linéarité dans une fréquence de gradient de réglage lors du réglage de la fréquence du faisceau lumineux entrant (6) sur le domaine de fréquences donné,
- en cas de détection d'une non-linéarité, utilisation desdites informations de la non-linéarité détectée pour compenser les effets sur les puissances détectées.

9. Méthode suivant la revendication 8, comprenant en outre l'étape suivante :

- production d'interférences en polarisant les parties reformées.

10. Méthode suivant la revendication 1 ou l'une quelconque des revendications ci-dessus, comprenant en outre au moins une des étapes suivantes :

- déduction de la dispersion en mode polarisation du dispositif en essai (2) à partir des informations obtenues par la mesure, de préférence représentée comme éléments de la matrice de Jones du dispositif en essai (2),
- déduction de la dispersion chromatique du dispositif en essai (2) à partir des éléments de la matrice de Jones du dispositif en essai (2),
- déduction des principaux états de polarisation du dispositif en essai (2) à partir des éléments de la matrice de Jones du dispositif en essai (2),
- déduction de la perte en fonction de la polarisation du dispositif en essai (2) à partir des éléments de la matrice de Jones du dispositif en essai (2),

- déduction des retards de groupe rapides et lents, associés aux principaux états rapides et lents de polarisation du dispositif en essai (2) à partir des éléments de la matrice de Jones du dispositif en essai (2),
- déduction de la perte d'insertion du dispositif en essai (2) à partir des éléments de la matrice de Jones du dispositif en essai (2),
- déduction de la transmissivité de réflectivité du dispositif en essai (2) à partir des éléments de la matrice de Jones du dispositif en essai (2),
- déduction des paramètres de dispersion en polarisation d'ordre supérieur, tels que le taux de modification du retard de groupe différentiel avec la fréquence, à partir des éléments de la matrice de Jones du dispositif en essai (2).

**11.** Méthode suivant la revendication 1 ou l'une quelconque des revendications ci-dessus, comprenant en outre l'étape suivante :

- division d'au moins un des éléments suivants en une première et une seconde partie en fonction de la polarisation : le premier faisceau lumineux (18), le second faisceau lumineux (20).

**12.** Méthode suivant la revendication 1 ou l'une quelconque des revendications ci-dessus, comprenant en outre les étapes suivantes :

- séparation des composantes spectrales de chacune des parties reformées en utilisant deux filtres passe-bande, de préférence des filtres RIF (réponse impulsionnelle finie), afin de produire un signal qui sera traité par une analyse des valeurs et vecteurs propres de la matrice de Jones,
- modification de la fréquence du signal oscillant plus rapide ou plus lent des composantes spectrales de manière à ce qu'il soit aligné avec l'autre signal oscillant, de préférence en utilisant le retard de groupe différentiel $RGD_{URP} = \tau_{OL,H} - \tau_{OL,V}$ de l'URP (unité de retard de polarisation), $\tau_{OL,H}$ étant le RGD d'une composante spectrale, $\tau_{OL,V}$ étant le RGD de l'autre composante spectrale, de préférence en réalisant la modification de fréquence par la soustraction d'un terme de phase linéaire au signal analytique par multiplication par $\exp(\pm \tau_{OL,H} - \tau_{OL,V}) \omega)$, $\omega$ étant la fréquence du faisceau lumineux entrant (6).

**13.** Méthode suivant la revendication 1 ou l'une quelconque des revendications ci-dessus, comprenant en outre l'étape suivante :

- sélection d'une valeur de RGD lors du retardement de la seconde partie du second faisceau lumineux (20) par rapport à la première partie du second faisceau lumineux (20) par rapport à une valeur de RGD ou inversement, lors du retardement de la seconde partie du premier faisceau lumineux (18) par rapport à la première partie du premier faisceau lumineux (18) de manière à garantir que les composantes spectrales respectives de chaque partie ne se coupent pas.

**14.** Appareil de détermination des propriétés optiques d'un dispositif optique en essai (2), comprenant :

un premier diviseur de faisceau (14) sur une trajectoire d'un faisceau lumineux entrant (6) pour diviser le faisceau lumineux entrant (6) en un premier faisceau lumineux (18) suivant une première trajectoire et un second faisceau lumineux (20) suivant une seconde trajectoire, dans lequel
le dispositif optique en essai (2) peut être couplé sur ladite première trajectoire pour le couplage dans le premier faisceau lumineux (18), **caractérisé par**
une unité de retard de polarisation OL (oscillateur local) (5) pour :

- la division du second faisceau lumineux (20) en une première et une seconde partie,
- le retardement de la seconde partie du second faisceau lumineux (20) par rapport à la première partie du second faisceau lumineux (20),

la reformation des première et seconde parties du second faisceau lumineux (20),
un second diviseur de faisceau (28) sur ladite première trajectoire et ladite seconde trajectoire pour superposer le premier faisceau lumineux (18) et les parties reformées du second faisceau lumineux (20) afin de produire des interférences entre le premier faisceau lumineux (18) et les parties reformées du second faisceau lumineux (20) en au moins un faisceau lumineux superposé résultant (30) suivant une trajectoire résultante,
une unité de détection (P1, P2, P3, P4) sur ladite trajectoire résultante pour détecter la puissance du faisceau lumineux superposé résultant (30) suivant la trajectoire résultante en tant que fonction de la fréquence et de la polarisation lors du réglage de la fréquence du faisceau de lumière entrant (6) sur un domaine de fréquences donné, une unité d'évaluation pour la déduction des propriétés optiques du dispositif optique en essai (2) à partir de l'étude des puissances détectées en fonction de la fréquence.

15. Appareil suivant la revendication 14, comprenant une unité d'évaluation pour la déduction d'éléments de la matrice de Jones du dispositif optique en essai (2) à partir de l'étude des puissances détectées en fonction de la fréquence.

16. Appareil suivant la revendication 14 ou 15, comprenant en outre un outil de réglage de la polarisation (26) positionné sur ladite première trajectoire pour le réglage de la polarisation du premier faisceau lumineux (18) sur une polarisation définie, dans lequel l'outil de réglage de la polarisation (26) est positionné sur la trajectoire du faisceau lumineux entrant (6) avant ou après le premier diviseur de faisceau (14).

17. Appareil suivant la revendication 15 ou 16, dans lequel l'outil de réglage de la polarisation (26) règle la polarisation du faisceau concerné (6 ; 18) de manière linéaire.

18. Appareil suivant la revendication 14 ou l'une quelconque des revendications 15 à 17, comprenant en outre : une unité de retardement de la polarisation du dispositif en essai (102) pour :

- la division du premier faisceau lumineux (18) en une première et une seconde partie,
- le retardement de la seconde partie par rapport à la première partie,
- la reformation des première et seconde parties,
- l'attribution de différentes polarisations aux parties reformées pour le couplage dans le dispositif optique en essai (2).

19. Appareil suivant la revendication 14 ou l'une quelconque des revendications 15 à 18, dans lequel au moins l'un des éléments suivants comprend un premier diviseur de faisceau de polarisation pour la division du premier faisceau lumineux (18) en une première et une seconde partie : l'unité de retardement de polarisation de l'OL, l'unité de retardement de polarisation du dispositif en essai (102).

20. Appareil suivant la revendication 14 ou l'une quelconque des revendications 15 à 19, dans lequel au moins l'un des éléments suivants comprend un second diviseur de faisceau de polarisation pour la reformation des première et seconde parties : l'unité de retardement de polarisation de l'OL, l'unité de retardement de polarisation du dispositif en essai (102).

21. Appareil suivant la revendication 14 ou l'une quelconque des revendications 15 à 20, dans lequel au moins l'un des éléments suivants comprend une première trajectoire optique pour la première partie et une seconde trajectoire optique pour la seconde partie, la seconde trajectoire ayant une longueur optique plus grande que celle de la première trajectoire, en vue du retardement de la seconde partie par rapport à la première partie : l'unité de retardement de polarisation de l'OL, l'unité de retardement de polarisation du dispositif en essai (102).

22. Appareil suivant la revendication 14 ou l'une quelconque des revendications 15 à 21, dans lequel au moins l'un des éléments suivants comprend un dispositif de polarisation pour attribuer à chacune des parties reformées différentes polarisations : l'unité de retardement de polarisation de l'OL, l'unité de retard de polarisation du dispositif en essai (102).

23. Appareil suivant la revendication 14 ou l'une quelconque des revendications 15 ou 22, dans lequel au moins l'un des éléments suivants comprend un dispositif qui attribue aux parties reformées différentes polarisations à un polarisateur afin de produire des interférences entre les parties d'un faisceau lumineux superposé résultant suivant une trajectoire résultante : l'unité de retardement de polarisation de l'OL, l'unité de retardement de polarisation du dispositif en essai (102), l'appareil comprenant en outre un détecteur de puissance sur ladite trajectoire résultante pour détecter la puissance du faisceau lumineux superposé résultant en tant que fonction de la fréquence lors du réglage de la fréquence du faisceau lumineux entrant (6) sur un domaine de fréquences donné, par lequel un résultat du détecteur de puissance est relié à l'unité d'évaluation pour la détection de toute non-linéarité dans une fréquence de gradient de réglage lors du réglage de la fréquence du faisceau lumineux entrant (6) sur le domaine de fréquences donné, et si l'unité d'évaluation détecte toute non-linéarité, l'unité d'évaluation utilise ladite information de non-linéarité détectée pour compenser les effets sur les puissances détectées engendrées par ladite non-linéarité.

24. Appareil suivant la revendication 23,
le dispositif étant au moins un des éléments suivants :

un port de sortie du second diviseur de faisceau de polarisation à ne pas raccorder avec le dispositif optique en essai (2),
un coupleur maintenant la polarisation, à raccorder avec le port de sortie du second diviseur de faisceau de polarisation à raccorder avec le dispositif optique en essai (2),
au moins un diviseur de faisceau à raccorder avec le port de sortie du second diviseur de faisceau de polarisation à raccorder avec le dispositif optique en essai (2).

$$* exp(-(\tau_{LO,H} - \tau_{LO,V})\omega)$$

Fig.1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1113250 A1
- US 09941133 B
- US 2003043467 A1
- EP 1113250 A
- US 09940741 B